# EUROPÄISCHE PATENTSCHRIFT

(11) **EP 0 394 615 B1**
(45) Veröffentlichungstag und Bekanntmachung des Hinweises auf die Patenterteilung: **14.04.1993**
(21) Anmeldenummer: 90101381.3
(22) Anmeldetag: 24.01.1990
(51) Int. Cl.: A47J 36/36, A47J 27/00

(54) **Doppelwandiger Kochtopf**
Double-skinned cooking utensil
Ustensile de cuisson à double paroi

(30) Priorität: 26.04.1989 DE 3913707
(43) Veröffentlichungstag der Anmeldung: 31.10.1990
(73) Patentinhaber: AMC International Alfa Metalcraft Corporation AG, 6343 Rotkreuz (CH)
(72) Erfinder: Schultz, Horst, c/o Keil & Schaafhausen, D-6000 Frankfurt am Main 1 (DE)
(74) Vertreter: Keil, Rainer A., Dipl.-Phys. Dr.

(56) Entgegenhaltungen:
- EP-A- 222 699
- DE-A- 3 339 848
- DE-C- 863 991
- FR-A- 683 617
- FR-A- 1 409 808
- FR-A- 2 437 184
- US-A- 2 431 193

## Beschreibung

Die Erfindung bezieht sich auf einen doppelwandigen Kochtopf mit einem Außentopf und einem darin angeordneten Innentopf stetiger Wandungsführung zur Aufnahme des Kochgutes, wobei die Seitenwandungen von Außentopf und Innentopf an ihrem unteren Rand über eine Bodenplattine aus gut wärmeleitfähigem Material und an ihrem oberen Rand unter Ausbildung eines Schüttrandes miteinander verbunden sind. Ein solcher Kochtopf ist in EP-A-222699 offenbart.

Bekannte doppelwandige Kochtöpfe dieser Art bieten eine gute Wärmeisolierung des Kochgutes beim Kochen und Garen aufgrund des zwischen den Topfkörpern gebildeten Hohlraums. Als nachteilig wird bei derartigen doppelwandigen Kochtöpfen jedoch empfunden, daß der oder die Topfgriffe nicht oder nur unter Schwierigkeiten an der Wandung des Außentopfes angebracht werden können. Die Anbringung von Topfgriffen geschieht im allgemeinen durch eine Punktschweißung, die jedoch an einem doppelwandigen Kochtopf aufgrund des Hohlraumes zwischen Außentopf und Innentopf nur durch Einfügung von zusätzlichen Teilen möglich ist. Klebverbindungen zwischen Griff und Wandung des Außentopfes sind zu einer ausreichenden Befestigung nicht geeignet. Unabhängig von der Befestigungsart setzt die Befestigung des Griffes an der Wandung des Außentopfes eine hinreichende Stärke des Wandungsmaterials voraus. Gelegentlich wird der Schüttrand eines doppelwandigen Topfes etwas breiter ausgeführt, um die Griffe daran anschweißen zu können. Dies führt jedoch zu einer verhältnismäßig hohen und daher unerwünschten Lage der Griffe in unmittelbarer Nachbarschaft des Dampfaustrittes zwischen Topf und Deckel.

Aufgabe der Erfindung ist es, einen doppelwandigen Kochtopf der eingangs genannten Art zu schaffen, bei dem es möglich ist, den oder die Griffe an der Wandung des Außentopfes beispielsweise mittels Punktschweißen einfach, schnell und sicher zu befestigen.

Diese Aufgabe wird erfindungsgemäß im wesentlichen dadurch gelöst, daß der Außentopf eine von dem Innentopf abweichende Wandungsführung aufweist und die Seitenwandungen von Innentopf und Außentopf, abgesehen von der oberen und unteren Randverbindung, nur in Punkt- oder Linienkontakt miteinander stehen. Es ist klar, daß hierbei nicht die exakten geometrischen Begriffe von Punkt und Linie gemeint sind, sondern lediglich zum Ausdruck gebracht werden soll, daß die Berührungsflächen möglichst klein bzw. möglichst schmal sein sollen, um die Wärmeisolation möglichst wenig zu beeinträchtigen. Im Bereich der Punkt- oder Linienkontakte der Wandungen des Außentopfes und des Innentopfes können Griffe in einfacher Weise ohne Probleme angepunktet werden, wozu der Abstand derartiger Punkt- oder Linienkontaktbereiche der Bemessung der Griffe angepaßt ist oder umgekehrt. Zwischen den Punkt- oder Linienkontaktbereichen verbleiben bei dem erfindungsgemäßen doppelwandigen Kochtopf Hohlräume zwischen den beiden Topfkörpern, wodurch die gute Wärmeisolierung des Kochgutes beim Kochen in befriedigender Weise erhalten bleibt. Das Wandungsmaterial von Innentopf und Außentopf kann darüber hinaus wegen der gegenseitigen Versteifung entsprechend dünner sein als bei herkömmlichen doppelwandigen Kochtöpfen. Dadurch daß der Innentopf eine stetige Wandungsführung behält, also glattwandig bleibt, läßt sich der Innentopf nachwievor gut reinigen.

In einer besonderen Ausgestaltung der Erfindung ist vorgesehen, daß der Innentopf im Horizontalschnitt gesehen rund oder oval ausgebildet ist.

Bei einer weiteren besonderen Ausgestaltung der Erfindung ist der Außentopf im Horizontalschnitt polygonartig oder mit Einbuchtungen ausgebildet. Bei einer derartigen Ausbildung wird der Innentopf durch das Anliegen an den Innenflächen der Polygonwandungen oder den Einbuchtungen des Außentopfes versteift. Neben der Aussteifung und Befestigungsmöglichkeit für die Griffe ist dabei sichergestellt, daß die beim Verbinden von Außentopf und Innentopf an ihren Bodenplattinen im Preßschweißverfahren abfließende Luft über die durch das Polygon oder die Einbuchtungen gebildeten Abströmkanäle zuverlässig abgeführt wird. Neben diesen technischen Vorteilen wird mit einem im Horizontalschnitt polygonartig oder mit Einbuchtungen ausgebildeten Außentopf ein neues und ansprechendes Aussehen für die Gestaltung eines Topfes geschaffen.

In weiterer Ausgestaltung dieses Erfindungsgedankens bildet die Wandung des Außentopfes einen regelmäßigen Polygonzug oder weist eine regelmäßige Umfangsverteilung von Einbuchtungen auf. Somit ist der Innentopf in gleichmäßigen Abständen durch das Anliegen an den Seiten des Polygonzuges bzw. den Einbuchtungen rundum versteift. Durch die regelmäßige Umfangsverteilung der Polygonseiten bzw. der Einbuchtungen wird der Innentopf schon beim Einsetzen in den Außentopf in diesem zentriert. Außerdem führt diese Ausführung zu einem besonders ansprechenden Aussehen des Kochtopfes.

Vorteilhafterweise sind Außentopf und Innentopf achsgleich zueinander angeordnet, so daß bei Gebrauch des doppelwandigen Kochtopfes von der Bedienungsperson stets die Position des Innentopfes aufgrund der Position des Außentopfes bspw. auf einer Herd- oder Kochplatte erkannt werden kann.

In weiteren besonderen Ausgestaltungen der Erfindung verlaufen die Berührungslinien zwischen Außentopf und Innentopf parallel zur Topfmittelachse, z.B. schraubenlinienförmig dazu. Weitere Anordnungen der Berührungslinien sind möglich, und dienen jeweils unterschiedlichen Formgebungen des Außentopfes und damit des doppelwandigen Kochtopfs. Sind lediglich Berührungspunkte vorgesehen, so können diese auf ähnlichen Linien angeordnet sein.

Vorteilhafterweise verlaufen die Berührungslinien über die praktisch gesamte Wandungshöhe von Innentopf und Außentopf, wodurch eine Versteifung über die praktisch gesamte Wandungshöhe eine Aussteifung erfolgt und die Höhe der Anbringung der Griffe über die gesamte Seitenwandung des Außentopfes je nach Herstellungsserie und gewünschtem Design unterschiedlich gewählt werden kann. Auch Berührungspunkte könnten linienförmig über die gesamte Wandungshöhe verteilt sein.

Um die Punktschweißung möglichst an vielen Stellen des erfindungsgemäßen Kochtopfes durchführen zu können und eine gleichmäßige Aussteifung erfolgt, andererseits aber die Wärmeisolation möglichst wenig beeinträchtigt wird, ist es zweckmäßig, daß die Berührungspunkte oder Berührungslinien etwa gleichmäßig über den Umfang des Außentopfes und des Innentopfes verteilt sind.

In einer ästhetisch besonders ansprechenden Ausgestaltung des erfindungsgemäßgen Kochtopfes bestehen der Außentopf und der Innentopf aus unterschiedlichen Materialien. So könnte beispielsweise der Innentopf aus Stahl, der Außentopf aus Kupfer bestehen.

Zweckmäßigerweise sind die Bodenwandungen von Außentopf und Innentopf über die Bodenplattine aus gut wärmeleitendem Material miteinander preßverschweißt. Auf diese Weise wird eine gute Wärmeverteilung bei der Wärmeübertragung von der Koch- oder Herdplatte auf das Kochgut garantiert.

Es kann ferner vorgesehen sein, daß der Schüttrand von der Wandung des Innentopfes gebildet und dichtend über den oberen Rand der Seitenwandung des Außentopfes gezogen ist. Somit wird in einfacher Weise verhindert, daß in den Hohlraum zwischen Innentopf und Außentopf ungewollt Flüssigkeit eindringen kann.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: einen erfindungsgemäßen doppelwandigen Kochtopf in Seitenansicht mit einem polygonartig ausgebildeten Außentopf,
- Fig. 2: einen Schnitt des doppelwandigen Kochtopf gemäß der Schnittlinie II-II aus Fig. 1,
- Fig. 3: einen doppelwandigen Kochtopf gemäß einer anderen Ausführungsform des Außentopfes,
- Fig. 4: einen Schnitt des Kochtopfs gemäß der Schnittlinie IV-IV aus Fig. 3,
- Fig. 5: eine Seitenansicht eines Kochtopfes, teilweise weggebrochen, gemäß einer weiteren Ausgestaltung des Außentopfes,
- Fig. 6: einen Schnitt des Kochtopfes gemäß der Schnittlinie VI-VI aus Fig. 5,
- Fig. 7: einen doppelwandigen Kochtopf in Seitenansicht mit einer weiteren Ausführungsform des Außentopfes,
- Fig. 8: den doppelwandigen Kochtopf gemäß der Schnittlinie VIII-VIII aus Fig. 7,
- Fig. 9: einen Kochtopf in Seitenansicht mit einer noch weiteren Ausführungsform des Außentopfes und
- Fig. 10: den doppelwandigen Kochtopf gemäß der Schnittlinie X-X aus Fig. 9,

wobei in sämtlichen Darstellungen die Griffe weggelassen sind.

Der in der Zeichnung dargestellte doppelwandige Kochtopf 2 weist einen Außentopf 4 auf, in dem ein Innentopf 6 angeordnet ist. Der Innentopf 6 hat eine im Horizontalschnitt gesehen runde Form, kann jedoch auch oval oder elliptisch ausgebildet sein. Außentopf 4 und Innentopf 6 sind koaxial zueinander angeordnet. Die Bodenwandungen 20, 22 des Außentopfes 4 und Innentopfes 6 sind über eine Bodenplattine 12 aus hochwärmeleitfähigem Material, wie Aluminium, miteinander preßverschweißt. Der Schüttrand 14 des Kochtopfes 2 wird von einer Verlängerung der Seitenwandung 10 des Innentopfes 6 gebildet und liegt dichtend auf dem oberen Rand der Seitenwandung 8 des Außentopfes 4 auf. Hierbei verschließt der Schüttrand 14 die zwischen Innentopf 6 und Außentopf 4 gebildeten Hohlräume luftdicht. Außentopf 4 und Innentopf 6 bestehen vorzugsweise aus Stahl. Sie können auch aus anderen Materialien, wie bspw. Kupfer und dgl. bestehen oder auch unterschiedlich innen und/oder außen beschichtet sein. Durch die Einbuchtungen 18 bzw. die polygonartige Ausbildung des Außentopfes 4 entstehen mit dem in dem Außentopf 4 angeordneten Innentopf 6 Berührungslinien entlang der Seitenwandungen 8, 10. Diese Berührungslinien 16 verlaufen praktisch über die gesamte Wandungshöhe von Innentopf 6 und Außentopf 4. Der guten Versteifung wegen sind die Berührungslinien 16 etwa gleichmäßig über den Umfang des Außentopfes 4 und des Innentopfes 6 verteilt. Für die Befestigung von Griffen mittels Punktschweißen genügen jedoch weniger Berührungslinien 16, bei einem Stilgriff eventuell sogar nur eine oder sogar nur ein Berührungspunkt. Bei einem Henkelgriff haben die Berührungslinien oder -punkte einen Umfangsabstand, welcher der Länge des bzw. der zu befestigenden Griffe entspricht.

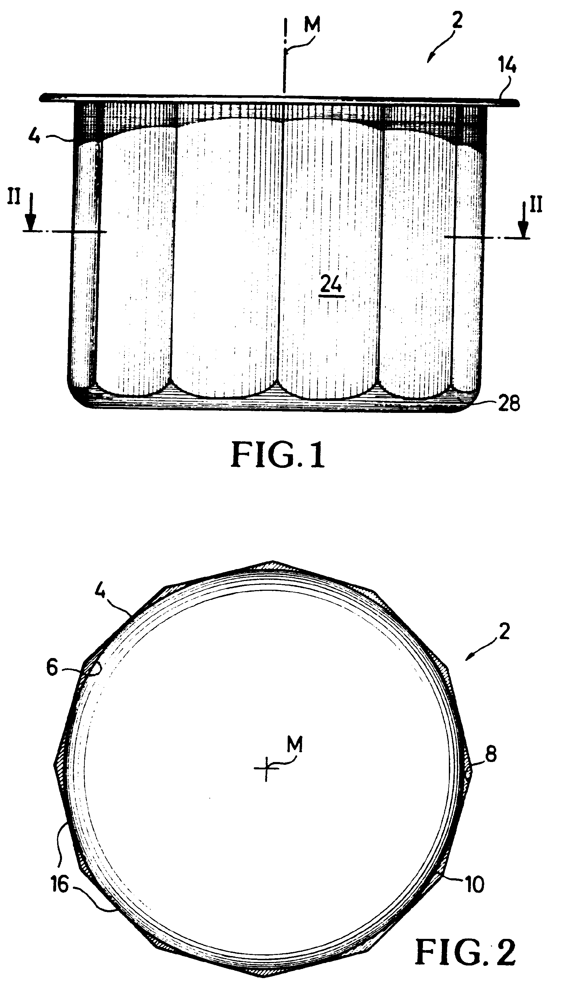

Der in Fig. 1 und 2 dargestellte erfindungsgemäße doppelwandige Kochtopf 2 weist einen polygonartig ausgebildeten Außentopf 4 auf, in welchem der runde Innentopf 6 zentrisch angeordnet ist, d.h. die Topfmittelachse M des Außentopfes 4 und des Innentopfes 6 fallen zusammen. Der Übergang der durch die Polygonseiten gebildeten Streifen 24 in den Bodenbereich des Außentopfes 4 weist einen relativ großen Radius auf. Insgesamt weist der Außentopf 4 zwölf Polygonseiten auf und ist somit auch zwölfeckig.

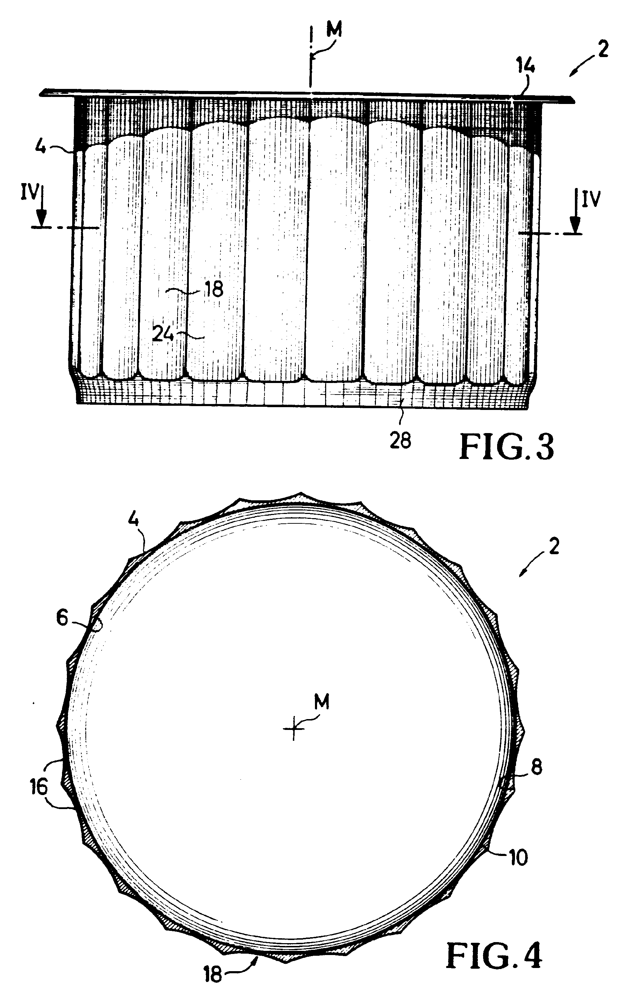

Der in Fig. 3 und 4 dargestellte doppelwandige Kochtopf 2 weist einen Außentopf 4 mit vierundzwanzig unmittelbar aneinandergrenzenden Einbuchtungen 18 auf. Die Einbuchtungen 18 sind kreisbogenförmig, wobei die konvexen Seiten der Einbuchtungen 18 in Richtung des Innentopfes 6 zeigen. Entsprechend der vierundzwanzig Einbuchtungen, welche der dargestellte Kochtopf 2 aufweist, bestehen auch vierundzwanzig achsparallele Berührungslinien 16 zwischen der Seitenwandung 8 des Außentopfes 4 und der Seitenwandung 10 des Innentopfes 6. Die einzelnen Streifen 24 der Einbuchtungen 18 im Außentopf 4 sind etwa bis in den Bodenbereich 28 in Höhe der Bodenplattine 12 gezogen, und enden dort in einer horizontalen Linie.

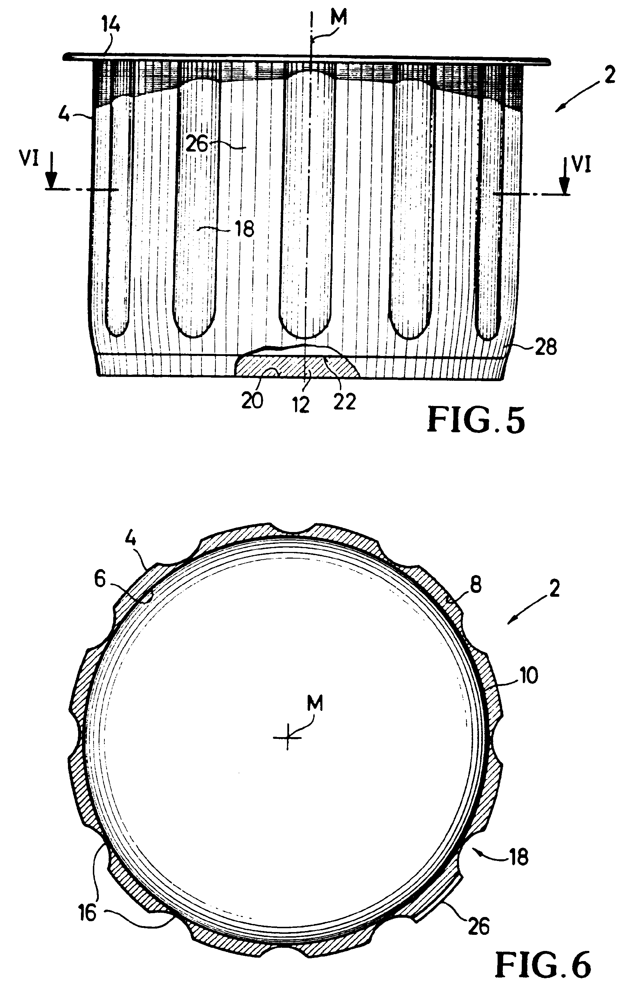

Der in Fig. 5 und 6 dargestellte Kochtopf 2 weist im Umfangsabstand zueinander rillenförmige Einbuchtungen 18 auf. Die Längsachsen der rillenförmigen Einbuchtungen 18 des Außentopfes 4 verlaufen auch hier parallel zur Topfmittelachse M. Der Außentopf 4 ist mit zwölf Einbuchtungen 18 versehen, die zwölf Berührungslinien 16 der Seitenwandungen 8, 10 entsprechen. Zwischen den Einbuchtungen 18 verbleiben in ihrer Breite etwa der Breite der Einbuchtungen 18 entsprechende Bereiche 26, in welchen die Wandungen von Außentopf 4 und Innentopf 6 in Abstand voneinander bleiben. Die durch die Einbuchtungen 18 gebildeten Streifen enden unten mit einem geringeren Radius, als gemäß Fig. 1.

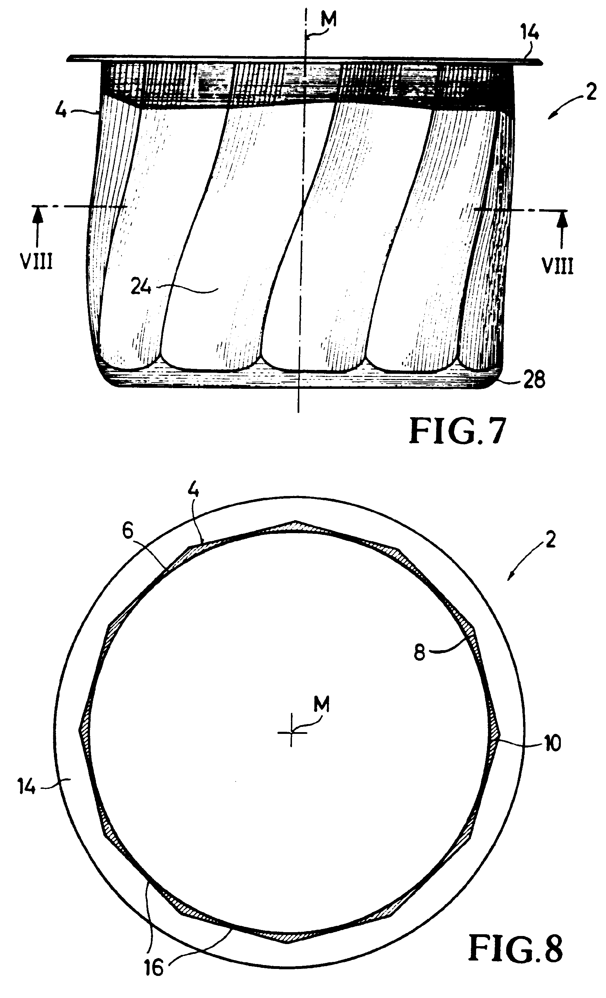

Der doppelwandige Kochtopf 2 gemäß den Fig. 7 und 8 weist einen in Draufsicht gesehen polygonartig ausgebildeten Außentopf 4 auf. Allerdings verlaufen hier die Berührungslinien 16 zwischen den Seitenwandungen 8 und 10 des Außentopfes 4 und Innentopfes 6 etwa schraubenlinienförmig zur Topfmittelachse M. Die durch die polygonartige Gestalt gebildeten schraubenlinienförmigen Streifen 24 ragen mit einem relativ flachen Abschluß in den Bodenbereich 28 des Außentopfes 4. Wie aus Fig. 8 gut erkennbar ist, ist der äußere Randbereich des Schüttrandes 14 etwas nach unten gezogen.

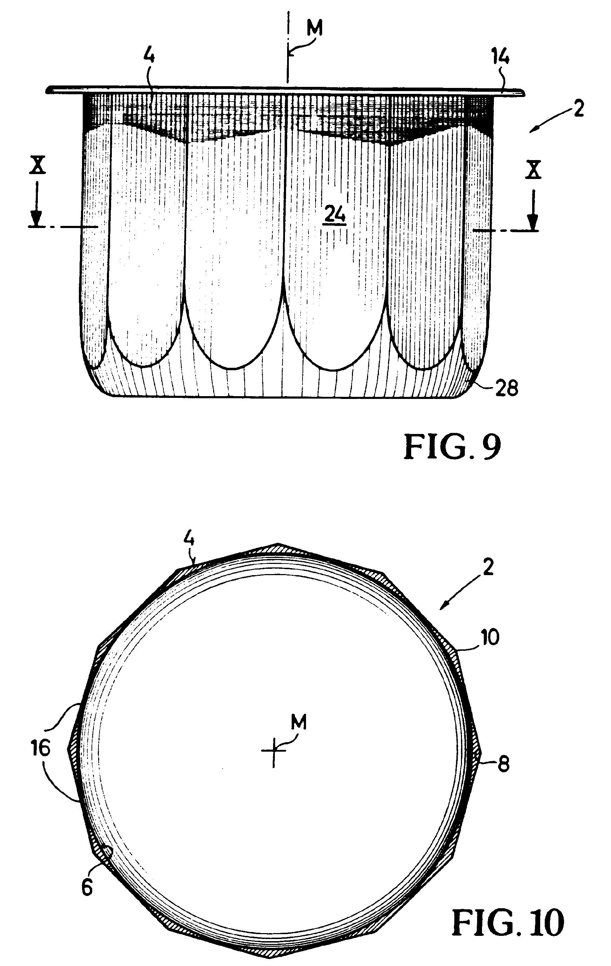

Die Fig. 9 und 10 zeigen einen doppelwandigen Kochtopf 2 ebenfalls mit polygonartiger Ausgestaltung des Außentopfes 4. Dieser Kochtopf 2 entspricht im wesentlichen dem von Fig. 1 und 2, wobei allerdings die Streifen 24 an ihrem unteren Ende mit einem nur kleinen Radius versehen sind.

### Bezugszeichenliste:

- 2: Kochtopf
- 4: Außentopf
- 6: Innentopf
- 8: Seitenwandungen
- 10: Seitenwandungen
- 12: Bodenplattine
- 14: Schüttrand
- 16: Berührungslinie
- 18: Einbuchtungen
- 20: Bodenwandung
- 22: Bodenwandung
- 24: Streifen
- 26: Bereich
- 28: Bodenbereich

- M: Topfmittelachse

## Patentansprüche

1. Doppelwandiger Kochtopf (2) mit einem Außentopf (4) und einem darin angeordneten Innentopf (6) stetiger Wandungsführung zur Aufnahme des Kochgutes, wobei die Seitenwandungen (8, 10) vom Außentopf (4) und Innentopf (6) an ihrem unteren Rand über eine Bodenplattine (12) aus gut wärmeleitfähigem Material und an ihrem oberen Rand unter Ausbildung eines Schüttrandes (14) miteinander verbunden sind, dadurch gekennzeichnet, daß der Außentopf (4) eine von dem Innentopf (6) abweichende Wandungsführung aufweist und die Seitenwandungen (8, 10) von Innentopf (6) und Außentopf (4), abgesehen von der oberen und unteren Randverbindung, lediglich in Punkt- oder Linienkontakt miteinander stehen.

2. Doppelwandiger Kochtopf nach Anspruch 1, dadurch gekennzeichnet, daß der Innentopf (6) im Horizontalschnitt rund oder oval ausgebildet ist.

3. Doppelwandiger Kochtopf nach Anspruch 1 oder 2, dadurch gekennzeichnet, daß der Außentopf (4) im Horizontalschnitt polygonartig oder mit Einbuchtungen (18) ausgebildet ist.

4. Doppelwandiger Kochtopf nach Anspruch 3, dadurch gekennzeichnet, daß die Seitenwandung (8) des Außentopfes (4) einen regelmäßigen Polygonzug bildet oder eine regelmäßige Umfangsverteilung von Einbuchtungen (18) aufweist.

5. Doppelwandiger Kochtopf nach einem der Ansprüche 1 bis 4, dadurch gekennzeichnet, daß der Außentopf (4) und der Innentopf (6) achsgleich zueinander angeordnet sind.

6. Doppelwandiger Kochtopf nach einem der Ansprüche 1 bis 5, dadurch gekennzeichnet, daß die Berührungslinien (16) zwischen Außentopf (4) und Innentopf (6) parallel zur Topfmittelachse (M) verlaufen bzw. die Berührungspunkte auf derart verlaufenden Linien angeordnet sind.

7. Doppelwandiger Kochtopf nach einem der Ansprüche 1 bis 5, dadurch gekennzeichnet, daß die Berührungslinien (16) schraubenlinienförmig zur Topfmittelachse (M) verlaufen bzw. die Berührungspunkte auf derartigen Linien angeordnet sind.

8. Doppelwandiger Kochtopf nach einem der Ansprüche 1 bis 7, dadurch gekennzeichnet, daß die Berührungspunkte oder Berührungslinien (16) praktisch über die gesamte Seitenwandungshöhe von Innentopf (6) und Außentopf (4) verteilt sind bzw. verlaufen.

9. Doppelwandiger Kochtopf nach einem der Ansprüche 1 bis 8, dadurch gekennzeichnet, daß die Berührungspunkte oder die Berührungslinien (16) etwa gleichmäßig über den Umfang von Außentopf (4) und Innentopf (6) verteilt sind.

10. Doppelwandiger Kochtopf nach einem der Ansprüche 1 bis 9, dadurch gekennzeichnet, daß Außentopf (4) und Innentopf (6) aus unterschiedlichen Materialien bestehen.

11. Doppelwandiger Kochtopf nach einem der Ansprüche 1 bis 10, dadurch gekennzeichnet, daß die Bodenwandungen (20, 22) von Außentopf (4) und Innentopf (6) über die Bodenplattine (12) aus gut wärmeleitfähigem Material miteinander preßverschweißt sind.

12. Doppelwandiger Kochtopf nach einem der Ansprüche 1 bis 11, dadurch gekennzeichnet, daß der Schüttrand (14) von der Seitenwandung (10) des Innentopfes (6) gebildet und dichtend über den oberen Rand der Seitenwandung (8) des Außentopfes (4) gezogen ist.

## Claims

1. Double-walled cooking vessel (2) having an outer vessel (4) and an inner vessel (6) arranged therein with a continuous wall guide for receiving the product to be cooked, the side walls (8, 10) of the outer vessel (4) and the inner vessel (6) being joined together at their lower edge by way of a base plate (12) made of a thermally conductive material and at their upper edge with the formation of a pouring rim (14), characterised in that the outer vessel (4) has a wall guide differing from the inner vessel (6), and the side walls (8, 10) of the inner vessel (6) and the outer vessel (4), apart from the upper and lower edge connection, are only in point or line contact with each other.

2. Double-walled cooking vessel according to claim 1, characterised in that the inner vessel (6) is formed with a circular or oval horizontal cross section.

3. Double-walled cooking vessel according to claim 1 or 2, characterised in that the outer vessel (4) is formed of a polygon or with indentations (18).

4. Double-walled cooking vessel according to claim 3, characterised in that the side wall (8) of the outer vessel (4) forms a regular polygon or has a regular peripheral distribution of indentations (18).

5. Double-walled cooking vessel according to one of claims 1 to 4, characterised in that the outer vessel (4) and the inner vessel (6) are arranged coaxially with each other.

6. Double-walled cooking vessel according to one of claims 1 to 5, characterised in that the contact lines (16) between the outer vessel (4) and the inner vessel (6) run parallel to the central axis (M) of the vessel, or the contact points are arranged in lines running in such a way.

7. Double-walled cooking vessel according to one of claims 1 to 5, characterised in that the contact lines (16) run helically to the central axis (M) of the vessel, or the contact points are arranged in lines of this type.

8. Double-walled cooking vessel according to one of claims 1 to 7, characterised in that the contact points or contacts lines (16) are distributed or run over substantially the entire height of the side wall of the inner vessel (6) and the outer vessel (4).

9. Double-walled cooking vessel according to one of claims 1 to 8, characterised in that the contact points or contact lines (16) are distributed approximately uniformly over the periphery of the outer vessel (4) and the inner vessel (6).

10. Double-walled cooking vessel according to one of claims 1 to 9, characterised in that the outer vessel (4) and the inner vessel (6) consist of different materials.

11. Double-walled cooking vessel according to one of claims 1 to 10, characterised in that the base walls (20, 22) of the outer vessel (4) and the inner vessel (6) are pressure-welded together by way of the base plate (12) made of a thermally conductive material.

12. Double-walled cooking vessel according to one of claims 1 to 11, characterised in that the pouring rim (14) is formed by the side wall (10) of the inner vessel (6) and extends over and seals the upper edge of the side wall (8) of the outer vessel (4).

## Revendications

1. Marmite ou casserole (2) à double paroi comportant un récipient extérieur (4) et, disposé à l'intérieur de celui-ci, un récipient intérieur (6) pourvu d'une paroi sans point anguleux destiné à recevoir l'aliment à cuire, les parois latérales (8, 10) des récipients extérieur (4) et intérieur (6) étant reliées entre elles au niveau de leur bord inférieur par l'intermédiaire d'une plaque de fond (12) en matériau bon conducteur de la chaleur et au niveau de leur bord supérieur en formant un bord verseur (14), caractérisé par le fait que le récipient extérieur (4) comporte une paroi dont la forme diffère de celle du récipient intérieur (6) et que le contact entre les parois latérales (8, 10) des récipients intérieur (6) et extérieur (4) est seulement ponctuel ou linéaire, exception faite de la liaison au niveau des bords supérieur et inférieur.

2. Marmite ou casserole à double paroi selon la revendication 1, caractérisée par le fait que le récipient intérieur (6), en coupe horizontale, est rond ou ovale.

3. Marmite ou casserole à double paroi selon la revendication 1 ou 2, caractérisée par le fait que le récipient extérieur (4), en coupe horizontale, est polygonal ou des anfractuosités (18).

4. Marmite ou casserole à double paroi selon la revendication 3, caractérisée par le fait que la paroi latérale (8) du récipient extérieur (4) forme un polygône régulier ou présente une répartition régulière des anfractuosités (18).

5. Marmite ou casserole à double paroi selon l'une des revendications 1 à 4, caractérisée par le fait que le récipient extérieur (4) et le récipient intérieur (6) sont concentriques.

6. Marmite ou casserole à double paroi selon l'une des revendications 1 à 5, caractérisée par le fait que les lignes de contact (16) entre le récipient extérieur (4) et le récipient intérieur (6) sont parallèles à l'axe médian (M) de la marmite ou de la casserole ou que les points de contact sont disposés sur de telles lignes.

7. Marmite ou casserole à double paroi selon l'une des revendications 1 à 5, caractérisée par le fait que les lignes de contact (16) s'étendent en hélice par rapport à l'axe médian (M) de la marmite ou de la casserole ou que les points de contact sont disposés sur de telles lignes.

8. Marmite ou casserole à double paroi selon l'une des revendications 1 à 7, caractérisée par le fait que les points de contact ou les lignes de contact (16) sont répartis ou s'étendent sur l'ensemble de la hauteur de la paroi latérale du récipient intérieur (6) et du récipient extérieur (4).

9. Marmite ou casserole à double paroi selon l'une des revendications 1 à 8, caractérisée par le fait que les points de contact ou les lignes de contact (16) sont répartis sensiblement régulièrement sur le pourtour du récipient intérieur (6) et du récipient extérieur (4).

10. Marmite ou casserole à double paroi selon l'une des revendications 1 à 9, caractérisée par le fait que le récipient intérieur (6) et le récipient extérieur (4) sont réalisés en des matériaux différents.

11. Marmite ou casserole à double paroi selon l'une des revendications 1 à 10, caractérisée par le fait que les parois de fond (20, 22) du récipient intérieur (6) et du récipient extérieur (4) sont soudées entre elles par pression par l'intermédiaire de la plaque de fond (12) en matériau bon conducteur de la chaleur.

12. Marmite ou casserole à double paroi selon l'une des revendications 1 à 11, caractérisée par le fait que le bord verseur (14) est formé par la paroi latérale (10) du récipient intérieur (6) et est amené de manière étanche au-dessus du bord supérieur de la paroi latérale (8) du récipient extérieur (4).
